**Europäisches Patentamt**

**European Patent Office**

**Office européen des brevets**

(19)

(11) Veröffentlichungsnummer: **0 191 352**

**B1**

(12) **EUROPÄISCHE PATENTSCHRIFT**

(45) Veröffentlichungstag der Patentschrift:
23.08.89

(21) Anmeldenummer: **86101065.8**

(22) Anmeldetag: **28.01.86**

(51) Int. Cl.⁴: **G 06 F 7/50**

(54) Anordnung zur Erhöhung oder Erniedrigung eines binären Operanden um einen vorgegebenen Wert.

(30) Priorität: **29.01.85 DE 3502904**

(43) Veröffentlichungstag der Anmeldung:
**20.08.86 Patentblatt 86/34**

(45) Bekanntmachung des Hinweises auf die Patenterteilung:
**23.08.89 Patentblatt 89/34**

(84) Benannte Vertragsstaaten:
**AT BE CH DE FR GB IT LI NL SE**

(56) Entgegenhaltungen:
**DE-C-2 135 607**
**US-H-560 488**

**IBM TECHNICAL DISCLOSURE BULLETIN, Band 20,
Nr. 4, September 1977, Seiten 1347-1348, New York,
US; J.W. PLANT: "Variable decrementer"**

(73) Patentinhaber: **Siemens Aktiengesellschaft,
Wittelsbacherplatz 2, D-8000 München 2 (DE)**

(72) Erfinder: **Huss, Rolf- Rüdiger, Dr., Lindacher
Strasse 8, D-8000 München 60 (DE)**

EP 0 191 352 B1

## Beschreibung

Schaltungsanordnung zur wahlweisen Erhöhung oder Erniedrigung eines binären Operanden um einen auswählbaren Wert

Die Erfindung betrifft eine Schaltungsanordnung zur wahlweisen Erhöhung oder Erniedrigung eines vorgegebenen binären Operanden um einen einer auswählbaren Stelle des Operanden entsprechenden Wert, insbesondere für Datenverarbeitungsanlagen.

In Datenverarbeitungsanlagen, aber auch bei vielen technischen Einrichtungen, die mit speicherprogammierter Steuerung arbeiten, besteht häufig die Notwendigkeit, einen vorgegebenen Operanden um einen vorgegebenen Wert, der dem Wert einer ausgewählten Stelle des Operanden entspricht, zu erhöhen oder zu erniedrigen. Ein derartiges Inkrementieren oder Dekrementieren dient beispielsweise dazu, Speicheradressen in Form binärer Zahlen zu modifizieren, z. B. durch Hinzuaddieren einer Acht entsprechend dem Wert der vierten Binärstelle, oder einen Befehlsgeber linear fortzuschalten.

Abgesehen von verhältnismäßig langsam arbeitenden älteren Lösungen mit Registerzählern oder herkömmlichen Addierern bzw. Subtrahierern sind bereits Lösungen bekannt, die lediglich logische Verknüpfungselemente verwenden - man siehe z. B. die DE-C2-2 135 607.

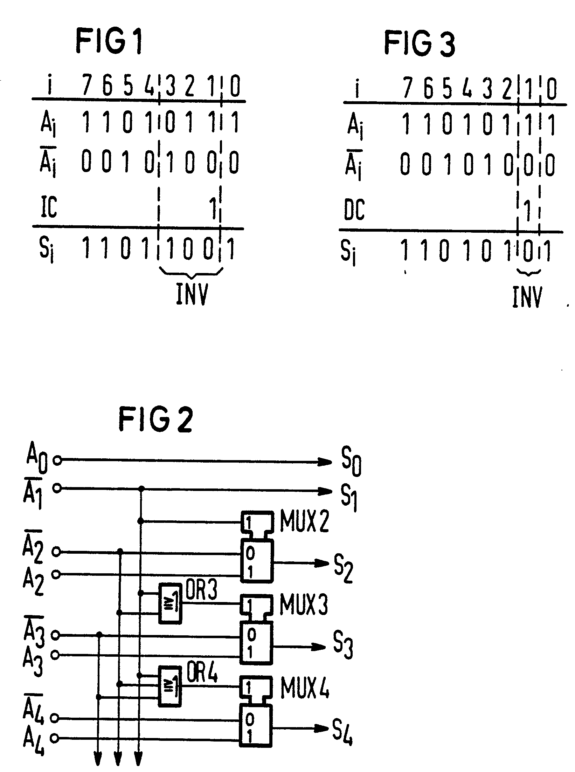

Diese Lösungen beruhen beim Inkrementieren auf dem aus FIG 1 ersichtlichen und beim Dekrementieren auf dem aus FIG 3 ersichtlichen Prinzip. Bei den Beispielen ist ein binärer Operand A mit 8 Bitstellen $i = 0$ bis $i = 7$ zugrundegelegt, der um den Wert "2" entsprechend der zweiten Bitstelle $i = 1$ gemäß FIG 1 erhöht bzw. gemäß FIG 3 erniedrigt werden soll. Aus der Gegenüberstellung der nicht invertierten und der invertierten Operandensignale $A_i$ bzw. $\bar{A}_i$ mit den sich ergebenden Ergebnissignalen $S_i$ ist ersichtlich, daß beim Inkrementieren ab der Änderungsbitstelle $i = 1$ bis zum Erreichen der Bitstelle, deren nicht invertiertes Operandensignal als erstes den Wert "0" aufweist, also bis zur Bitstelle $i = 3$ (Bereich 1NV) die Ergebnissignale $S_i$ den invertierten Operandenstellensignalen $\bar{A}_i$ und bei allen anderen Bitstellen den nicht invertierten Operandenstellensignalen $A_i$ entsprechen. Beim Dekrementieren gemäß FIG 3 ist es dagegen umgekehrt. Hier bilden die invertierten Operandenstellensignale $\bar{A}_i$ die Ergebnissignale $S_i$ bis zum Erreichen der ersten Bitstelle, deren nicht invertiertes Operandenstellensignal als erstes den Wert "1" aufweist (Bereich 1NV).

Zur Realisierung dieses Prinzips verwendet die bekannte Lösung nach der DE-C2-2 135 607 zwei Gruppen von exclusiven ODER-Gliedern und eine Gruppe von UND-Gliedern, wobei jeder Operandenbitstelle ein Element aus jeder Gruppe zugeordnet ist. Die exclusiven ODER-Glieder der einen Gruppe liefern dabei die Ergebnissignale abhängig von dem jeweiligen nicht invertierten Operandenstellensignal und dem Ausgangssignal des zugehörigen UND-Gliedes, während die exklusiven ODER-Glieder der anderen Gruppe die einzelnen, nicht invertierten Operandenstellensignale mit einem die Änderungsrichtung entsprechend dem Inkrementieren bzw. dem Dekrementieren um jeweils den Wert "1" entsprechend der niedrigsten Bitstelle anzeigenden Signal verknüpfen, wobei die Ausgangssignale dieser exklusiven ODER-Glieder jeweils auf alle den jeweils nächsthöheren Bitstellen zugeordneten UND-Glieder einwirken. Steuersignale sind in diesem Falle also ausschließlich die nicht invertierten Operandenstellensignale, und eine Änderung ist lediglich um den konstanten Wert "1" möglich.

Aus der US-H-560 488 ist des weiteren eine nach dem genannten Prinzip arbeitende Lösung bekannt, die für die Erzeugung der Ergebnissignale sowohl die invertierten als auch die nicht invertierten Operandenstellensignale verwendet, indem entweder das invertierte oder das nicht invertierte Operandenstellensignal als Ergebnissignal durchgeschaltet wird. Die Umschaltung zwischen dem jeweiligen invertierten und dem nicht invertierten Operandenstellensignal wird dabei von den invertierten Operandenstellensignalen gesteuert, die jeweils durch eine, ein ODER-Glied nachbildende Reihenschaltung aus einem NOR-Glied und einem NICHT-Glied gebündelt werden und darüber zwei einen Multiplexer nachbildende Schalter steuern - man siehe z. B. FIG 10 - . Diese bekannte Schaltung läßt aber nur ein Inkrementieren um den Wert "1" zu.

Aufgabe der Erfindung ist es, ausgehend von den bekannten Prinzipien des Inkrementierens und Dekrementierens eine einfache universelle Schaltungsanordnung zu schaffen, bei der sowohl die Änderungsrichtung als auch der Wert der Änderung in einem vorgegebenen Ausmaß wahlweise festlegbar ist.

Diese Aufgabe wird gemäß der Erfindung durch die kennzeichnenden Merkmale des Patentanspruchs 1 gelöst.

Danach zeigt die neue Schaltungsanordnung einen ähnlichen Aufbau wie die Anordnung gemäß der DE-C2-2 135 607. Jedoch werden jeweils zwei zueinander inverse Operandenstellensignale für die Erzeugung der Ergebnissignale durch die ersten Auswahlschalter und für die Erzeugung der Umsteuersignale abhängig von der jeweils gewählten Änderungsrichtung durch die zweiten Auswahlschalter sowie die den Steuereingängen der ersten Auswahlschalter vorgeschalteten ODER-Glieder herangezogen. Darüber hinaus sind die für die Festlegung des jeweiligen Änderungswertes notwendigen Schaltungsmaßnahmen in die zweiten Auswahlschalter integriert, indem diese um ein zweites Signaleingangspaar erweitert sind, auf das durch ein individuelles zweites Steuersignal umgeschaltet wird, wenn die zugehörige Bitstelle niederwertiger ist als die dem Änderungswert entsprechende Bitstelle, so daß alle niederwertigen Operandenstellensignale von einer Änderung ausgeschlossen sind. Diese

zweiten Steuersignale werden dabei in einfacher Weise den, den jeweiligen Änderungswert festlegenden Signalen mittels einer Logikschaltung abgeleitet.

Es ist zwar aus IBM Technical Disclosure Bulletin, vol. 20, No. 4, Sept. 1977, Seiten 1347 und 1348 eine Anordnung mit einem wählbaren Änderungswert bekannt. Diese läßt aber nur ein Dekrementieren zu. Außerdem arbeitet diese Anordnung mit in einem Speicher abgespeicherten Ergebnissen, der mit dem jeweils zu dekrementierenden Wert adressiert wird, wobei eine zusätzliche Steuerung eine dem jeweiligen Änderungswert entsprechende Adressenmodifikation durchführt. Eine derartige Lösung ist daher mit der neuen Lösung gemäß der Erfindung ebenfalls nicht vergleichbar.

Einzelheiten der Erfindung seien nachfolgend anhand eines in der Zeichnung dargestellten Ausführungsbeispiels näher erläutert. Im einzelnen zeigen

FIG. 1 ein Beispiel für das Inkrementieren gemäß dem Stand der Technik,

FIG. 2 eine mögliche Schaltungsanordnung zu FIG 1,

FIG. 3 ein Beispiel für das Dekrementieren gemäß dem Stand der der Technik,

FIG. 4 eine mögliche Schaltungsanordnung zu FIG 3,

FIG. 5 und 6 zwei Beispiele für die Ausbildung der in FIG 2 und 4 verwandten Auswahlschalter und

FIG. 7 A und 7 B eine Schaltungsanordnung gemäß der Erfindung.

FIG 2 zeigt eine gemäß FIG 1 arbeitende Schaltungsanordnung. Da alle niederwertigeren Bitstellen als die Inkrementierbitstelle unverändert bleiben, wird im vorliegenden Fall das Operandenstellensignal $A_0$ fest durchgeschaltet, während für die Inkrementierbitstelle das invertierte Operandensignal $A_1$ fest durchgeschaltet wird. Für alle übrigen Bitstellen sind dagegen Auswahlschalter, z. B. MUX2, notwendig, da von vornehrein nicht abzusehen ist, welches der beiden zur Verfügung stehenden Operandenstellensignale, z. B. $A_2$ und $A_2$, zum richtigen Ergebnissignal, z. B. $S_2$, führt. Dadurch daß jeweils die invertierten Operandenstellensignale an die Signaleingänge 0 geführt sind, erfolgt in der Ruhestellung der Auswahlschalter MUX... immer eine Invertierung des zugehörigen eigentlichen Operandenstellensignals $A_i$. Zu invertieren ist aber jeweils nur solange, bis zum ersten mal ein Operandenstellensignal den Ziffernwert "0" darstellt. Das entspricht einem invertierten Operandenstellensignal $A_i = 1$. Demzufolge sind von der Inkrementierungsbitstelle an alle invertierten Operandenstellensignale $A_i$ direkt bzw. nachfolgend über ODER-Gatter OR3 und OR4 zusammengefaßt mit den Steuereingängen der einzelnen Auswahlschalter MUX2 bis MUX4 verbunden. Sobald daher eines der invertierten Operandenstellensignale $A_i$ den Wert "1" annimmt, wird die Invertierung der Operandenziffernwerte aller höherwertigen Bitstellen aufgehoben.

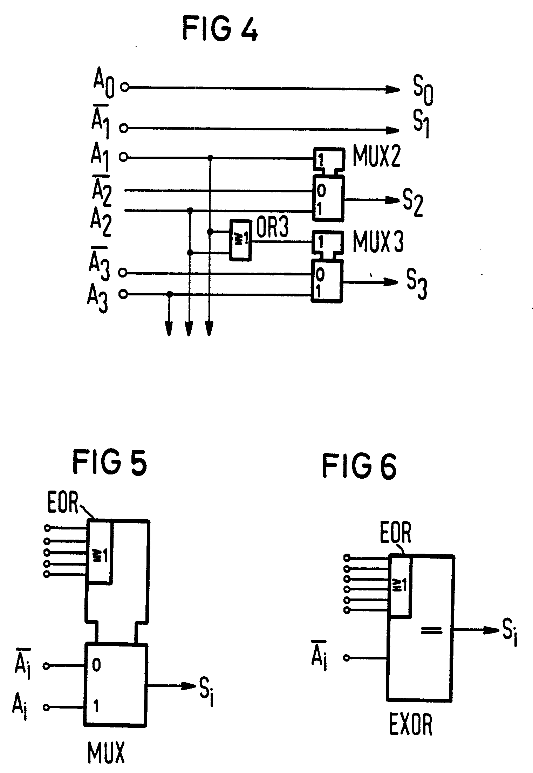

Der Aufbau der gemäß FIG 3 arbeitenden Schaltungsanordnung gemäß FIG 4 unterscheidet sich von der nach FIG 2 allein dadurch, daß anstelle der invertierten Operandenstellensignale $A_i$ nunmehr die nicht invertierten Operandenstellensignale $A_i$ für die Umsteuerung der Auswahlschalter MUX2 und MUX3 herangezogen werden, da der erste auftretende binäre Ziffernwert "1" eine Beendigung der Invertierung bewirkt.

Als Auswahlschalter können exklusive ODER-Glieder oder, wie in FIG 2 und FIG 4 dargestellt, vorzugsweise Multiplexer verwendet werden. Letztere bedeuten in der Regel weniger Aufwand und haben in der Regel auch kürzere Laufzeiten zur Folge, so daß das gewünschte Ergebnis schneller zur Verfügung steht.

Gegenüber normalen exklusiven ODER-Gliedern bzw. Multiplexern mit vorgeschalteten ODER-Gliedern, z. B. OR3 und OR4 in FIG 4, kann eine weitere Laufzeitverkürzung durch Verwendung von Schaltgliedern mit Erweiterungsschaltungen am Steuereingang entsprechend FIG 5 oder FIG 6 erreicht werden.

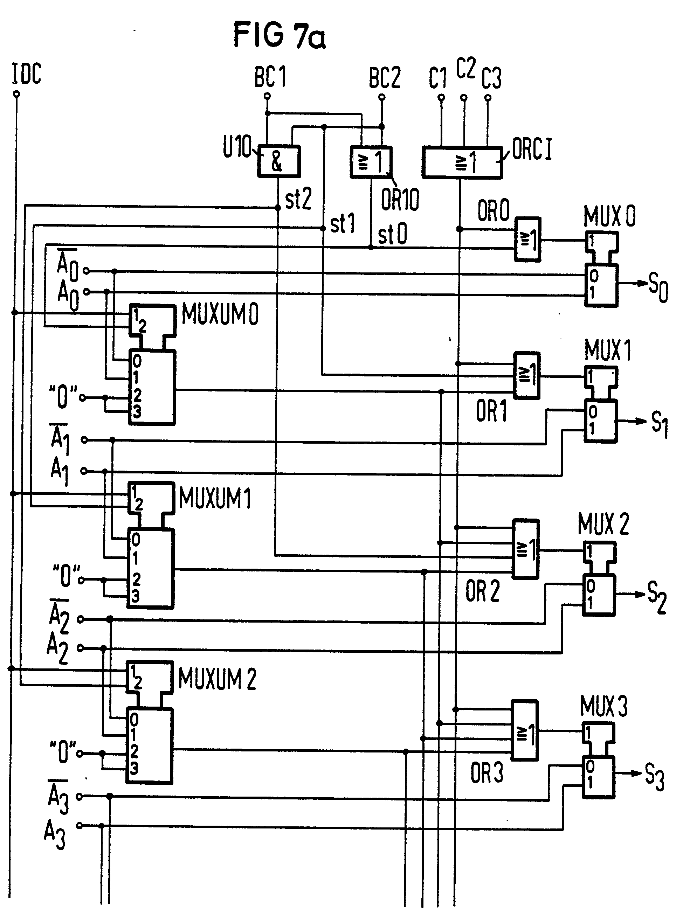

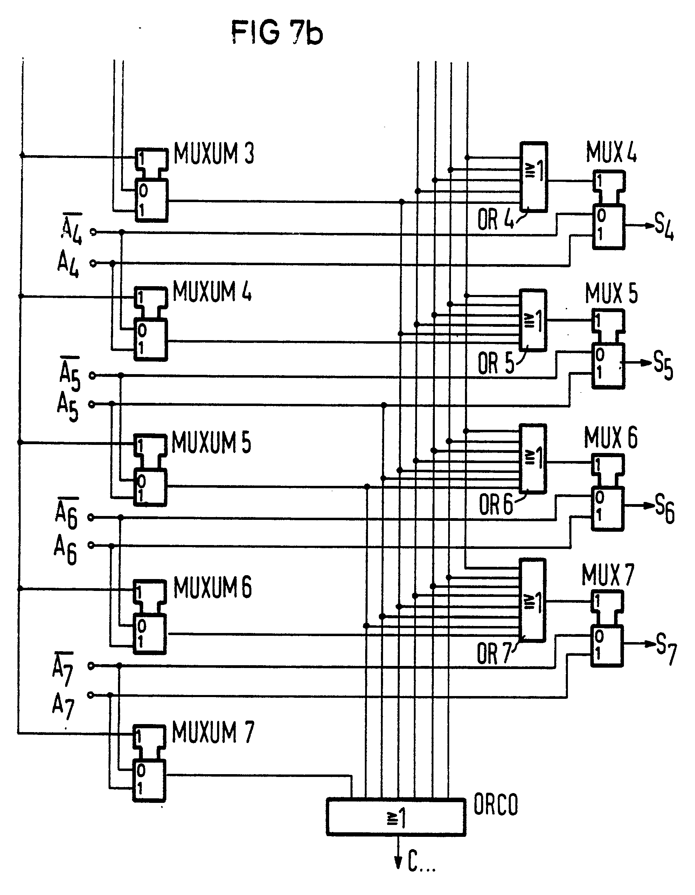

FIG 7 A und FIG 7 B zeigt schließlich in Anlehnung an Fig 2 und FIG 4 eine universelle Schaltungsanordnung gemäß der Erfindung in Form eines Modulbausteines für acht Operandenbitstellen entsprechend einem Byte, der mit weiteren Bausteinen zusammengeschaltet werden kann, um Operanden mit mehr als acht Bitstellen verarbeiten zu können.

Der rechte Teil der Schaltungsanordnung mit den acht ODER-Gliedern OR0 bis OR7 und den Multiplexern MUX0 bis MUX7 als Auswahlschalter entspricht daher einer Erweiterung der Schaltungsanordnung von FIG 2 oder FIG 4, wobei für den Fall der Zusammenschaltung mit anderen Modulbausteinen auch für die niederwertigste Bitstelle ein ODER-Glied OR0 und ein Auswahlschalter MUX0 sowie zwei zusätzliche ODER-Glieder ORCI und ORCO vorgesehen sind.

Das eine ODER-Glied ORCI übernimmt dabei von den anderen Modulbausteinen, um die Laufzeit möglichst gering zu halten, die Umsteuersignale, z. B. C1, C2 und C3 beim letzten Modulbaustein von insgesamt vier Bausteinen entsprechend einer Operandenbreite von 32 Bit, von den anderen Modulbausteinen parallel, um die im Ruhezustand wirksame Invertierung aufzuheben. Der Ausgang dieses ODER-Gliedes ORCI wirkt daher ebenfalls auf alle ODER-Glieder OR0 bis OR7 ein.

Das andere ODER-Glied ORCO faßt dagegen die innerhalb des Modulbausteines entstehenden Umsteuersignale zusammen und stellt am Ausgang das Umsteuersignal C für höherwertigere Bitstellen verarbeitende Modulbausteine zur Verfügung, das bei diesen dann als eines der Signale C1 bis C3 am jeweiligen ODER-Glied ORCI wirksam wird.

Der linke Teil der Schaltungsanordnung stellt eine Ergänzung dar, die wahlweise abhängig vom Signal IDC das Inkrementieren oder das Dekrementieren ermöglicht sowie eine Auswahl verschiedener Änderungswerte zuläßt. Je Bitstelle ist dazu ein weiterer Auswahlschalter, z. B. in Form von Multiplexern MUXUM0 bis MUXUM7 vorgesehen. Diese Auswahlschalter liefern abhängig vom Steuersignal IDC das jeweils als Umsteuersignal benötigte Operandenstellensignal, nämlich beim Inkrementieren mit IDC = O das invertierte Operandenstellensignal $\overline{A_i}$ und beim Dekrementieren mit IDC = 1 das nicht invertierte Operandenstellensignal $A_i$.

Im vorliegenden Fall sind außerdem die Bitstellen i = 0 bis 3 entsprechend den Änderungswerten 1, 2, 4 und 8 als Änderungsbitstellen frei wählbar. Dies wird abhängig von Signalen BC1 und BC2 gesteuert, die zusammen binär verschlüsselt den jeweils gewählten Änderungswert kennzeichnen und von denen durch das ODER-Glied OR 10 und das UND-Glied U 10 die benötigten Steuersignale st0 bis st2 abgeleitet werden, wenn ein vom Änderungswert 1 abweichender Änderungswert 2, 4 oder 8 gewählt wird.

Da beim Verschieben der Änderungsbitstelle zu höheren Änderungswerten hin verhindert werden muß, daß die niederwertigeren Operandenstellensignale invertiert werden, müssen die zugehörigen Auswahlschalter, z. B. MUX0 bis MUX2, umgesteuert werden, so daß der Signaleingang 1 für das nicht invertierte Operandenstellensignal $A_i$ zum Ergebnisausgang durchgeschaltet wird. Demzufolge ist jeweils eines der Steuersignale st0 bis st2 mit einem der den einzelnen Auswahlschaltern MUX0 bis MUX2 vorgeschalteten ODER-Gliedern OR0 bis OR2 verbunden, so daß jeweils alle umzusteuernden Auswahlschalter, z. B. MUX0 bis MUX2, umgeschaltet werden.

Zusätzlich sind Auswahlschalter für alle niederwertigeren Bitstellen vor der Änderungsbitstelle erforderlich, die verhindern, daß die jeweils zugehörigen Operandenstellensignale vorzeitig ein die Umsteuerung bewirkendes Steuersignal erzeugen. Diese Auswahlschalter sind im vorliegenden Falle mit den Auswahlschaltern für die Festlegung der Änderungsrichtung kombiniert, was an den Auswahlschaltern MUXUM0 bis MUXUM2 im Vergleich zu den übrigen Auswahlsteuerschaltern MUXUM3 bis MUXUM7 ersichtlich ist. Die kombinierten Auswahlsteuerschalter MUXUM0 bis MUXUM2 weisen zwei weitere Signaleingänge auf, die durch einen weiteren Steuereingang auswählbar sind. Damit ist eine Umschaltung von den Operandenstellensignalen $A_i$ und $\overline{A_i}$ auf ein die Umsteuerung verhinderndes Signal "0" an den Signaleingängen 2 und 3 möglich, das an Stelle des sonst auszuwählenden Operandenstellensignals auf die Ausgangsleitung geschaltet wird. Auf diese Weise können alle Operandenstellensignale der niederwertigeren Bitstellen, z. B. i = 0 bis 2, vor der Änderungsbitstelle für die interne Steuerung unwirksam geschaltet werden und der Anfangspunkt für den Invertierungsbereich ohne Auswirkung verschoben werden.

Soll beispielsweise mit BC1 = 1 und BC2 = 1 bei 1DC = 0 ein Operand A um den Wert "8" erhöht werden, dann werden aufgrund der Signale st0 bis st2 die Auswahlschalter MUX0 bis MUX2 auf die Durchschaltung der zugehörigen nicht invertierten Operandenstellensignale $A_0$ bis $A_2$ eingestellt, d. h. die Signale der gegenüber der Änderungsbitstelle i = 3 niederwertigeren Operandenbitstellen i = 0 bis 2 werden unverändert durchgeschaltet. Weiterhin bewirken die Steuersignale st0 bis st2 an den zugehörigen Steuerauswahlschaltern MUXUM 0 bis MUXUM 2 ein Unwirksamschalten der Operandenstellensignale $A_0$ bis $A_2$, so daß von diesen kein die notwendige Invertierung aufhebendes Umsteuersignal ausgehen kann. Erst der der wirksamen Änderungsbitstelle zugeordnete Auswahlsteuerschalter MUXUM3 kann in der Folge als erster ein solches Umsteuersignal erzeugen und die Invertierung der nachfolgenden Bitstellen verhindern, wenn der eigene Ziffernwert eine "0" ist und daher die Invertierung auf die Änderungsbitstelle beschränkt bleibt.

## Patentansprüche

1. Schaltungsanordnung zur wahlweisen Erhöhung oder Erniedrigung eines vorgegebenen binären Operanden (A) um einen einer vorgegebenen Stelle (z. B. i = 3) des Operanden entsprechenden auswählbaren Wert (z. B. "8"), insbesondere für Datenverarbeitungsanlagen,
   gekennzeichnet
- durch einen ersten Auswahlschalter (z. B. MUX0 bis MUX7) für jede der Bitstellen (z. B. i = 0 bis i = 7), dem jeweils die zueinander inversen Operandenstellensignale (z. B. $A_0$ und $\overline{A_0}$) der zugehörigen Bitstelle (i = 0) als Eingangssignale zugeführt werden und dessen Ausgang das jeweils ausgewählte Eingangssignal (z. B. $A_0$ = 0) als Ergebnissignal ($S_0$) liefert,
- durch einen dem jeweiligen Steuereingang der ersten Auswahlschalter (MUX0 bis MUX7) vorgeschaltetes ODER-Glied (z. B. OR0 bzw. OR1 bzw... bzw. OR7), dem bei einer Erhöhung jeweils die invertierte und bei einer Erniedrigung jeweils die nicht invertierten Operandenstellensignale (z. B. $\overline{A_0}$ bis $\overline{A_6}$ bzw. $A_0$ bis $A_6$) jeweils aller niederwertigeren Bitstellen zugeführt werden und über das der jeweilige erste Auswahlschalter (MUX0 bzw. MUX1 bzw. ... MUX7) auf die Durchschaltung des jeweils zugeführten nicht invertierten Operandensignales ($A_0$ bzw. $A_1$ bzw. $A_7$) umsteuerbar ist,
- durch zusätzliche zweite Auswahlschalter (MUXUM0 bis MUXUM7) je Bitstelle gegebenenfalls mit Ausnahme der höchsten Bitstelle mit Signaleingängen für die jeweils zueinander inversen Operandenstellensignale (z. B. $A_0$ und $\overline{A_0}$) und einen Steuereingang für ein die Änderungsrichtung festlegendes erstes Steuersignal (IDC), das in einheitlicher Weise entweder das nicht invertierte oder das invertierte Operandenstellsignal der jeweils zugehörigen Operandenbitstelle als Steuersignal für alle ODER-Glieder (OR1 bis OR7) der den nachfolgenden höheren Bitstellen zugeordneten ersten Auswahlschalter (z. B. MUX1 bis MUX7) freigibt, wobei die zweiten Auswahlschalter (z. B. MUXUM0 bis MUXUM2) für alle der dem maximalen Änderungswert (z. B. "8") entsprechenden Bitstelle (z. B. $i = 3$) vorausgehenden niederwertigeren Bitstellen (z. B. $i = 0$ bis $i = 2$) einen zusätzlichen Steuereingang und zwei zusätzliche, mit einem die Umsteuerung der ersten Auswahlschalter verhindernden Signale (z. B. "0") beaufschlagte Signaleingänge aufweisen, auf die durch ein dem zweiten Steuereingang zugeführtes zweites Steuersignal (z. B. st2) umgesteuert wird, das vom Änderungswert abgeleitet ist, und

- durch eine vom jeweiligen Änderungswert (z. B. "8") einstellbare Logikschaltung (z. B. U10, OR10) zur Erzeugung individueller zweiter Steuersignale (z. B. st0, st1 und st2) für jeweils alle der jeweiligen Änderungsbitstelle vorausgehenden niederwertigeren Bitstellen, wobei diese zweiten Steuersignale jeweils zugleich auf das ODER-Glied (z. B. OR0 bzw. OB1 bzw. OR2) des der jeweils zugehörigen Bitstelle zugeordneten Auswahlschalters (MUX0 bzw. MUX1 bzw. MUX2) einwirken.

2. Schaltungsanordnung nach Anspruch 1, dadurch gekennzeichnet daß als Auswahlschalter Multiplexer (z. B. MUX0 bis MUX7 und MUXUM0 bis MUXUM7) vorgesehen sind.

3. Schaltungsanordnung nach Anspruch 1, dadurch gekennzeichnet, daß die die Ergebnissignale ($S_i$) liefernden Auswahlschalter als exklusive ODER-Glieder ausgebildet sind, wobei dem einen Signaleingang jeweils das invertierte Operandenstellsignal ($A_i$) und dem anderen Signaleingang jeweils das abgeleitete Einstellsteuersignal zugeführt wird.

4. Schaltungsanordnung nach einem der Ansprüche 1 bis 3, dadurch gekennzeichnet, daß bei Unterteilung des Operanden (A) in mehrere Gruppen von Operandenstellensignalen alle von den zweiten Auswahlschaltern (z. B. MUXUM0 bis MUXUM7) gelieferten Ausgangssignale einem zusätzlichen ODER-Glied (ORC0) zugeführt werden, dessen Ausgangssignal (C) als Umsteuersignal für alle höherwertigen Gruppen von Operandenstellensignalen dient.

5. Schaltungsanordnung nach Anspruch 4, gekennzeichnet durch ein weiteres ODER-Glied (ORC1) in den höherwertigen Gruppen von Operandenstellensignalen zur Zusammenfassung der von den jeweils niederwertigeren Gruppen bereitgestellten Umsteuersignale (z. B. C1, C2, C3), wobei das Ausgangssignal dieses ODER-Gliedes zusätzlich auf alle den Steuereingängen der ersten Auswahlschalter (MUX0 bis MUX7) dieser Gruppe vorgeschalteten ODER-Glieder (z. B. OR0 bis OR7) einwirken.

**Claims**

1. Circuit arrangement for optionally incrementing or decrementing a predetermined binary operand (A) by a selectable value (for example "8") corresponding to a predetermined position (for example $i = 3$) of the operand, especially for data processing systems, characterized

- by a first selection switch (for example MUX0 to MUX7) for each of the bit positions (for example $i = 0$ to $i = 7$), which is in each case supplied with the mutually inverse operand position signals (for example $A_0$ and $\overline{A_0}$) of the associated bit position ($i = 0$) as input signals and the output of which supplies the input signal (for example $A_0 = 0$) selected in each case as result signal ($S_0$),

- by an OR gate (OR0 or OR7 or... or OR7) connected in series with for example the respective control input of the first selection switch (MUX0 to MUX7) which is in each case supplied with the inverted operand position signals with an incrementation and in each case with the non-inverted operand position signals with a decrimentation (for example $\overline{A_0}$ to $\overline{A_6}$ and $A_0$ to $A_6$, respectively) of all least significant bit positions in each case and via which the respective first selection switch (MUX0 or MUX1 or... MUX7) can be switched to switching-through the non-inverted operand signal ($A_0$ or $A_1$ or $A_7$) supplied in each case,

- by additional second selection switches (MUXUM0 to MUXUM7) per bit position, if necessary with the exception of the highest bit position with signal inputs for the in each case mutually inverse operand position signals (for example $A_0$ and $\overline{A_0}$) and a control input for a first control signal (1DC), which determines the direction of change and which uniformly enables either the non-inverted or the inverted operand position signal of the respectively associated operand bit position as control signal for all OR gates (OR1 to OR7) of the first selection switches (for example MUX1 to MUX7) associated with the subsequent higher bit positions, in which arrangement the second selection switches (for example MUXUM0 to MUXUM2) exhibit for all least significant bit positions (for example $i = 0$ to $i = 2$) preceding the bit position (for example $i = 3$) corresponding to the maximum change value (for example "8") an additional control input and two additional signal inputs to which a signal (for example "0") is applied which prevents the switch-over of the first selection switches, to which is switched over by a second control signal (for example st2) which is supplied to the second control input and which is derived from the change value, and

- by a logic circuit (for example U10, OR10), which can be set by the respective change value (for example "8"), for generating individual second control signals (for example st0, st1 and st2) for in each case all least significant bit positions preceding the respective change bit position, in which arrangement these second control signals in each case act simultaneously on the OR gate (for example OR0 or OR1 or OR2) of the selection switch (MUX0 or MUX1 or MUX2) associated with the in each case associated bit position.

2. Circuit arrangement according to Claim 1, characterized in that multiplexes (for example MUX0 to MUX7 and MUXUM0 to MUXUM7) are provided as selection switches.

3. Circuit arrangement according to Claim 1, characterized in that the selection switches supplying the result signals ($S_i$) are constructed as exclusive OR gates, in which arrangement one signal input is in each case supplied with the inverted operand position signal ($A_i$) and the other signal input is in each case supplied with the derived setting control signal.

4. Circuit arrangement according to one of Claims 1 to 3, characterized in that, when the operand (A) is subdivided into several groups of operand position signals, all output signals supplied by the second selection switches (for example MUXUM0 to MUXUM7) are supplied to an additional OR gate (ORC0) the output signal (C) of which is used as switch-over signal for all most significant groups of operand position signals.

5. Circuit arrangement according to Claim 4, characterized by a further OR gate (ORC1) in the most significant groups of operand position signals for combining the switch-over signals (for example C1, C2, C3) provided by the in each case least significant groups, in which arrangement the output signal of this OR gate additionally acts on all OR gates (for example OR0 to OR7) connected in series with the control inputs of the first selection switches (MUX0 to MUX7) of this group.

## Revendications

1. Montage pour augmenter ou diminuer, à volonté un opérande binaire prédéterminé (A), d'une valeur pouvant être sélectionnée (par exemple "8"), correspondant à un chiffre prédéterminé (par exemple i = 3) de l'opérande, notamment pour des installations de traitement de données, caractérisé

- par un premier commutateur de sélection (par exemple MUX0 à MUX7) pour chacune des positions binaires (par exemple i = 0 à i = 7), auquel sont envoyés respectivement les signaux, inverses entre eux, du chiffre de l'opérande (par exemple $A_0$ et $A_0$) de la position binaire associée (i = 0) en tant que signaux d'entrée et dont la sortie délivre, en tant que signal de résultat ($S_0$), le signal de sortie respectivement sélectionné (par exemple $A_0$ = 0),

- par circuit OU (par exemple OR0 ou OR1 ou OR7), qui est branché en amont de l'entrée respective de commande du premier commutateur de sélection (MUX0 à MUX7) et auquel, dans le cas d'une augmentation, respectivement les signaux inversés des chiffres de l'opérande et, dans le cas d'une réduction, respectivement les signaux non inversés des chiffres de l'opérande (par exemple $A_0$ à $A_6$ ou $A_0$ à $A_6$) de toutes les positions binaires possédant des poids inférieur et par l'intermédiaire duquel le premier commutateur respectif de sélection (MUX0 ou MUX1 ou... MUX7) peut être commuté inversement sur la transmission du signal respectif envoyé, non inversé, de l'opérande ($A_0$ ou $A_1$ ou $A_7$),

- par des seconds commutateurs supplémentaires de sélection (MUXUM0 à MUXUM7) pour chaque position binaire, éventuellement à l'exception de la position binaire la plus élevée, comportant des entrées pour les signaux, respectivement inversés entre eux, des chiffres de l'opérande (par exemple $A_0$ et $A_0$) et une entrée de commande pour un premier signal de commande (IDC), qui détermine le sens de la modification et libère, d'une manière uniforme, soit le signal non inversé, soit le signal inversé du chiffre binaire respectivement associé de l'opérande en tant que signal de commande pour tous les circuit OU (OR1 à OR7) des premiers commutateurs de sélection (par exemple MUX1 à MUX7), associés aux positions binaires supérieures suivantes, les seconds commutateurs de sélection (par exemple MUXUM0 à MUXUM2) possédant, pour toutes les positions binaires de poids inférieur (par exemple i = 0 à i = 2), qui précèdent la position binaire (par exemple i = 3) correspondant à la valeur maximale de modification (par exemple "8"), une entrée supplémentaire de commande et deux entrées supplémentaires de signaux, qui sont chargées par un signal (par exemple "0") empêchant la commutation inverse des premiers commutateurs de sélection, et vers lesquels s'effectue la commutation inverse sous l'effet d'un second signal de commande (par exemple st2) envoyé à - la seconde entrée de commande et tiré de la valeur de modification, et

- par un circuit logique (par exemple U10 ou OR10), qui est réglable par la valeur respective de modification (par exemple "8") et sert à produire des seconds signaux individuels de commande (par exemple st0, st1 et st2) respectivement pour l'ensemble des positions binaires de poids inférieur, qui précèdent la position binaire respective de modification, ces seconds signaux de commande agissant respectivement simultanément sur la porte OU (par exemple OR0 ou OR1 ou OR2) du commutateur de sélection (MUX0 ou MUX1 ou MUX2) affecté à la position binaire respectivement associée.

2. Montage suivant la revendication 1, caractérisé par le fait qu'il est prévu, comme commutateur de sélection, des multiplexeur (par exemple MUX0 à MUX7 et MUXUM0 à MUXUM7).

3. Montage suivant la revendication 1, caractérisé par le fait que les commutateurs de sélection, qui délivrent les signaux de résultat ($S_i$), sont réalisés sous la forme de circuits OU-Exclusif, le signal inversé ($A_i$) du chiffre de l'opérande étant envoyé à l'entrée des signaux, tandis que le signal dérivé de commande de réglage est envoyé respectivement à l'autre entrée des signaux.

4. Montage suivant l'une des revendications 1 à 3, caractérisé par le fait que, dans le cas d'une subdivision de l'opérande (A) en plusieurs groupes de signaux de chiffres de l'opérande, tous les signaux de sortie délivrés par les seconds commutateurs de sélection (par exemple MUXUM0 à MUXUM7) sont envoyés à un circuit OU supplémentaire (ORC0), dont le signal de sortie (C) est utilisé comme signal d'inversion de commande pour tous les groupes de poids supérieur de signaux de chiffres de l'opérande.

5. Montage suivant la revendication 4, caractérisé par un autre circuit ou (ORC1) pour les groupes de poids supérieur de signaux de chiffres de l'opérande, pour réunir les signaux d'inversion de commande (par exemple C1, C2, C3) préparés par les groupes possédant respectivement des poids inférieurs, le signal de sortie de ce circuit OU agissant en outre sur tous les circuits OU (par exemple OR0 à OR7), branchés en amont des entrées de commande des premiers commutateurs de sélection (MUX0 à MUX7) de ce groupe.

## FIG 1

| i | 7 | 6 | 5 | 4 | 3 | 2 | 1 | 0 |
|---|---|---|---|---|---|---|---|---|
| $A_i$ | 1 | 1 | 0 | 1 | 0 | 1 | 1 | 1 |
| $\overline{A_i}$ | 0 | 0 | 1 | 0 | 1 | 0 | 0 | 0 |
| IC | | | | | | | 1 | |
| $S_i$ | 1 | 1 | 0 | 1 | 1 | 0 | 0 | 1 |

INV

## FIG 3

| i | 7 | 6 | 5 | 4 | 3 | 2 | 1 | 0 |
|---|---|---|---|---|---|---|---|---|
| $A_i$ | 1 | 1 | 0 | 1 | 0 | 1 | 1 | 1 |
| $\overline{A_i}$ | 0 | 0 | 1 | 0 | 1 | 0 | 0 | 0 |
| DC | | | | | | | 1 | |
| $S_i$ | 1 | 1 | 0 | 1 | 0 | 1 | 0 | 1 |

INV

## FIG 2

# FIG 4

$A_0$ ○ ————————————————→ $S_0$

$\overline{A_1}$ ○ ————————————————→ $S_1$

$A_1$ ○ ——————————— 1 ⌐ MUX2

$\overline{A_2}$ —————————— 0

1 ——→ $S_2$

$A_2$ ———————— ≥1 OR3 ———

1 ⌐ MUX3

$\overline{A_3}$ ○ ————— 0

$A_3$ ○ ————— 1 ——→ $S_3$

# FIG 5

EOR

≥1

$\overline{A_i}$ ○ —— 0

$A_i$ ○ —— 1 ——→ $S_i$

MUX

# FIG 6

EOR

≥1

$\overline{A_i}$ ○ ——

= ——→ $S_i$

EXOR

# FIG 7a

# FIG 7b